# EUROPÄISCHE PATENTSCHRIFT

(11) **EP 3 186 893 B1**
(45) Veröffentlichungstag und Bekanntmachung des Hinweises auf die Patenterteilung: **24.07.2019**
(21) Anmeldenummer: 15762524.5
(22) Anmeldetag: 31.08.2015
(51) Int. Cl.: H04B 1/034, H01M 2/10, H04B 1/3883

(54) **DRAHTLOS-TASCHENSENDER, AKKUMULATOREINHEIT FÜR EINEN DRAHTLOS-TASCHENSENDER**
WIRELESS POCKET TRANSMITTER AND RECHARGEABLE BATTERY UNIT FOR A WIRELESS POCKET TRANSMITTER
ÉMETTEUR DE POCHE SANS FIL ET UNITÉ ACCUMULATEUR POUR ÉMETTEUR DE POCHE SANS FIL

(30) Priorität: 29.08.2014 DE 102014217347
(43) Veröffentlichungstag der Anmeldung: 05.07.2017
(73) Patentinhaber: Sennheiser electronic GmbH & Co. KG, 30900 Wedemark (DE)
(72) Erfinder: KUREK, Peter, 30938 Burgwedel (DE); LINNEMANN, Ulf, 30449 Hannover (DE)
(74) Vertreter: Eisenführ Speiser
(86) Internationale Anmeldenummer: PCT/EP2015/069851
(87) Internationale Veröffentlichungsnummer: WO 2016/030540

(56) Entgegenhaltungen:
- EP-A1- 2 620 998
- WO-A1-92/10004
- DE-U- 7 245 574

## Beschreibung

Die vorliegende Erfindung betrifft einen Drahtlos-Taschensender, eine Akkumulatoreinheit für einen Drahtlos-Taschensender, ein Drahtlos-Mikrofon, einen Akkumulator für ein Drahtlos-Mikrofon und eine Ladeeinheit für einen Taschensender und/oder ein Mikrofon.

Mobile elektroakustische Vorrichtungen (wie beispielsweise Mikrofone und Drahtlos-Taschensender) sind hinlänglich bekannt und verfügen über einen wiederaufladbare Energieversorgung.

In der prioritätsbegründenden deutschen Patentanmeldung hat das Deutsche Patent- und Markenamt die folgenden Dokumente recherchiert: DE 72 45 574 U, EP 0 685 894 A1, EP 0 530 719 A1 und DE 201 06415 U1.

DE 7245574 U zeigt einen Drahtlos-Taschensender mit einer Antenne zum drahtlosen Senden eines empfangenen Audiosignals. Der Sender weist eine Vorderseite, eine Rückseite, eine Oberseite und ein Aufnahmefach für einen Akkumulator auf, das eine Rückwand, welche zumindest teilweise Teil der Rückseite bildet, zwei Seitenflächen und einen Anschlussabschnitt mit elektrischen Kontakten aufweist. Die beiden Seitenflächen sind jeweils mit einer Seite der Rückwand gekoppelt. Die zwei Seitenflächen sind mit einem ersten Ende mit dem Anschlussabschnitt gekoppelt. Die zweiten Enden der Seitenflächen weisen jeweils eine Führung für den Akkumulator auf. Die Führung erstreckt sich nicht entlang der gesamten Länge der Seitenfläche.

WO 92/10004 A1 zeigt einen Sender mit einer Antenne, einer Rückseite, einer Vorderseite, einer Oberseite und einem Aufnahmefach für einen Akkumulator.

EP 2620998 A1 zeigt eine elektronische Vorrichtung mit einem Batterieaufnahmefach.

Es ist eine Aufgabe der vorliegenden Erfindung, elektroakustische Vorrichtungen vorzusehen, welche einen vereinfachten Austausch der Energieversorgung ermöglichen.

Diese Aufgabe wird durch einen Drahtlos-Taschensender nach Anspruch 1 und durch eine Akkumulatoreinheit nach Anspruch 5 gelöst.

Somit wird ein Drahtlos-Taschensender mit einer Rückseite, einer Vorderseite, einer Unterseite und einem Aufnahmefach für einen Akkumulator vorgesehen. Das Aufnahmefach weist eine Rückwand, welche zumindest teilweise einen Teil der Rückseite bildet, zwei Seitenflächen und einen Anschlussabschnitt mit elektrischen Kontakten auf. Die zwei Seitenflächen sind jeweils mit einer ersten Seite mit der Rückwand gekoppelt und mit einem ersten Ende mit dem Anschlussabschnitt gekoppelt. Die zweiten Enden der Seitenflächen weisen jeweils eine Führung für den Akkumulator auf. Die Führungen erstrecken sich nicht entlang der gesamten Länge der Seitenfläche und die Führung weist zwei Vorsprünge und einen Durchgang dazwischen auf.

Die Seitenflächen weisen an ihren ersten Enden jeweils eine Rampe auf.

Gemäß einem weiteren Aspekt der vorliegenden Erfindung weisen die Seitenflächen jeweils eine zweite Seite auf, die der ersten Seite gegenüberliegt und als Auflagefläche für den Akkumulator dient.

Gemäß einem weiteren Aspekt der vorliegenden Erfindung weist der Anschlussabschnitt einen Vorsprung auf, der sich im Wesentlichen parallel zu der Rückwand erstreckt.

Gemäß einem weiteren Aspekt der vorliegenden Erfindung weist die Rückwand des Taschensenders einen Vorsprung auf.

Die Erfindung betrifft ebenfalls eine Akkumulatoreinheit für einen Drahtlos-Taschensender. Die Akkumulatoreinheit weist eine Vorderseite, eine Rückseite, eine linke und rechte Seite, eine Oberseite und eine Unterseite auf. Ferner ist ein Vorsprung im Bereich der Unterseite und entlang der Rückseite und der linken und rechten Seite vorgesehen. Jeweils eine Ausnehmung ist an der rechten und linken Seite zur Rückseite hin vorgesehen. Ein Vorsprung ist in den beiden Ausnehmungen vorgesehen. Der Vorsprung ist mit einem Ende mit dem umlaufenden Vorsprung verbunden und erstreckt sich teilweise entlang der Ausnehmung.

Gemäß einem Aspekt der vorliegenden Erfindung weist die Akkumulatoreinheit eine elektrische Ladekontakteinheit und einen USB-Ladeanschluss auf der Unterseite auf.

Gemäß einem weiteren Aspekt der vorliegenden Erfindung weist die elektrische Kontakteinheit sechs Kontakte an der Oberseite auf. Die elektrische Ladekontakteinheit weist sechs Ladekontakte auf.

Die Erfindung betrifft ebenfalls die Verwendung einer oben beschriebenen Akkumulatoreinheit in einem oben beschriebenen Drahtlos-Taschensender.

Weitere Ausgestaltungen der Erfindung sind Gegenstand der Unteransprüche.

Vorteile und Ausführungsbeispiele der Erfindung werden nachstehend unter Bezugnahme auf die Zeichnung näher erläutert.
- Fig. 1A - 1J: zeigen verschiedene Ansichten eines Drahtlos-Taschensenders gemäß einem ersten Ausführungsbeispiel,
- Fig. 2A - 2H: zeigen verschiedene Ansichten eines Akkumulators für einen Taschensender nach Fig. 1A - 1G gemäß einem zweiten Ausführungsbeispiel,
- Fig. 3A - 3E: zeigen verschiedene Ansichten eines Drahtlos-Mikrofons,
- Fig. 4A - 4H: zeigen verschiedene Ansichten eines Akkumulators für das Drahtlos-Mikrofon von Fig. 3A - 3D, und
- Fig. 5A - 5G: zeigen verschiedene Ansichten einer Ladeeinheit.

Ein Drahtlos-Taschensender gemäß der Erfindung kann einen Mikrofon-Drahtlos-Taschensender oder einen Drahtlos-Gitarrentaschensender darstellen. Ein Taschensender weist einen Eingang auf, über welchen der Taschensender ein Audiosignal z. B. von einem Mikrofon oder einer Gitarre empfängt und dieses Signal drahtlos sendet.

Ein Akkumulator, Akku oder eine Akkumulatoreinheit gemäß der Erfindung stellt einen wiederaufladbaren Speicher für elektrische Energie dar. Der Akkumulator, der Akku oder die Akkumulatoreinheit dient z. B. der Energieversorgung des Drahtlos-Taschensenders.

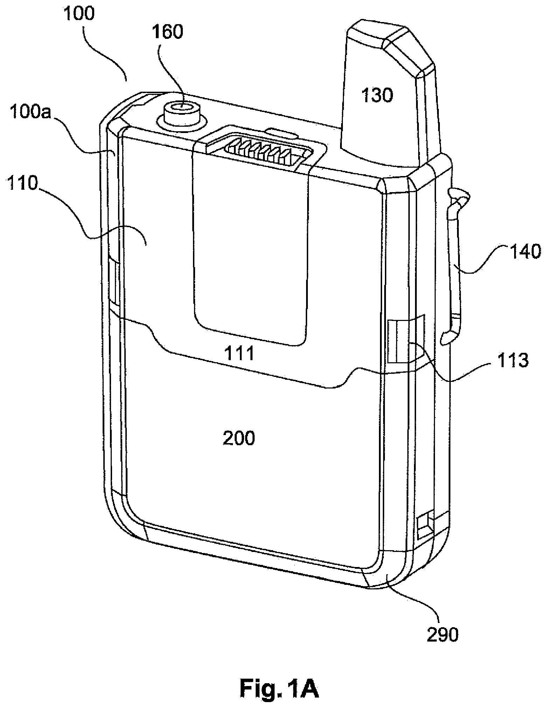

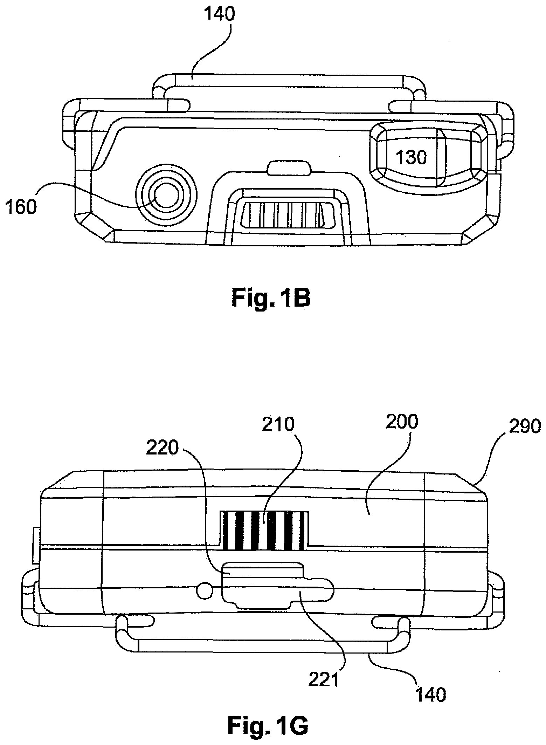

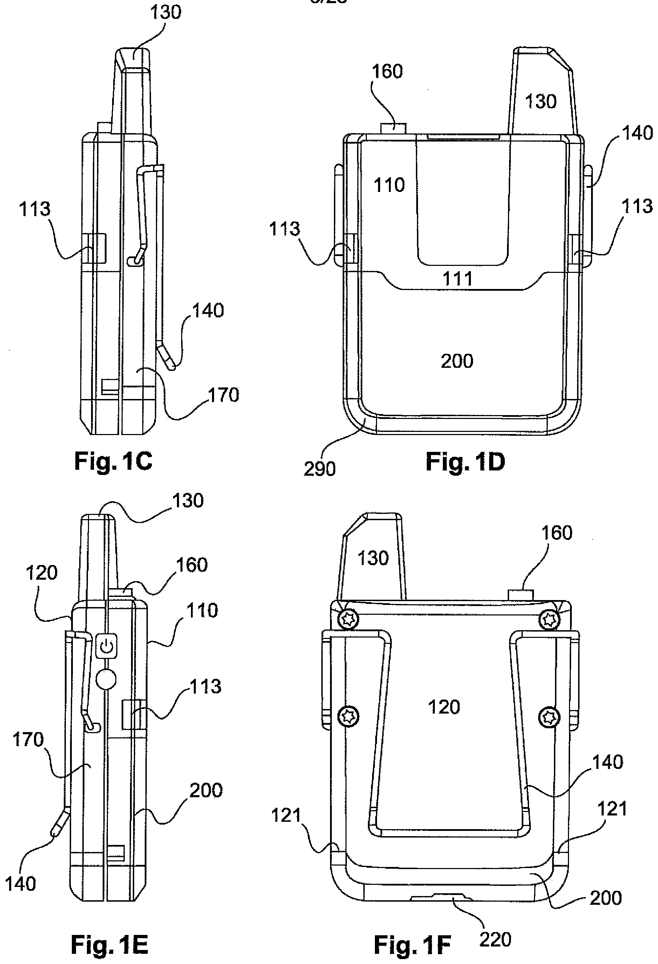

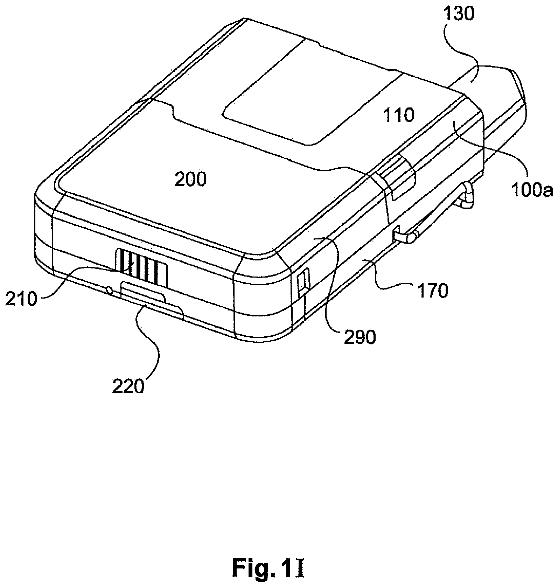

Fig. 1A - 1J zeigen verschiedene Ansichten eines Drahtlos-Taschensenders gemäß einem ersten Ausführungsbeispiel. Der Drahtlos-Taschensender 100 weist eine Buchse oder einen Audioeingang 160 beispielsweise für ein Mikrofon oder eine Gitarre auf und wandelt die über die Buchse 160 empfangenen Audiosignale in Drahtlos-Audiosignale um, welche dann drahtlos übertragen werden können. Der Taschensender 100 weist eine Vorderseite 110 mit einem Vorsprung 111, mit einer Verriegelung 113 für einen Akkumulator 200 und eine Rückseite 120 mit einem Vorsprung 122 auf. Ferner weist der Taschensender 100 eine Antenne 130 zum drahtlosen Senden eines zu übertragenden Audiosignals, einen Befestigungsbügel 140, eine Oberseite 150 mit einer Buchse 160 beispielsweise für ein Mikrofon, eine Seitenwand 170 und eine Führung 171 für einen Akku 200 auf. Ferner weist der Drahtlos-Taschensender 100 sechs elektrische Kontakte 180, 181 -186 auf.

Der Drahtlostaschensender 100 weist ein Aufnahmefach 101 zur Aufnahme eines Akkumulators 200 auf. Das Aufnahmefach 101 weist eine Rückwand 101a, welche zumindest teilweise Teil der Rückseite 120 des Taschensenders ist, auf. Ferner weist das Aufnahmefach 101, zwei Seitenflächen 101c und einen Anschlussabschnitt 101b mit elektrischen Kontakten 180, 181-186 auf. Die zwei Seitenflächen 101c sind jeweils mit einer Seite 101d mit der Rückwand 101a gekoppelt. Die zwei Seitenflächen 101c sind mit einem ersten Ende mit dem Anschlussabschnitt 101b gekoppelt. Die zweiten Enden der Seitenflächen 101c weisen jeweils eine Führung 171, 172 für den Akkumulator 200 auf. Die Führungen 171, 172 erstrecken sich nicht entlang der gesamten Länge der Seitenfläche 101c. Die Führungen 171, 172 weisen zwei Vorsprünge 171 und einen Durchgang 172 zwischen den beiden Vorsprüngen auf.

Der Vorsprung 122 der Rückseite 120 erstreckt sich über die Enden der Seitenwände 170 hinaus und dient als Auflage- oder Einführhilfe bzw. als Einfädelhilfe für den Akkumulator 200. Das einzuführende Ende des Akkumulators 200 kann auf dem Vorsprung 122 platziert werden und der Akkumulator wird so ausgerichtet und kann in das Aufnahmefach 101 eingeschoben werden.

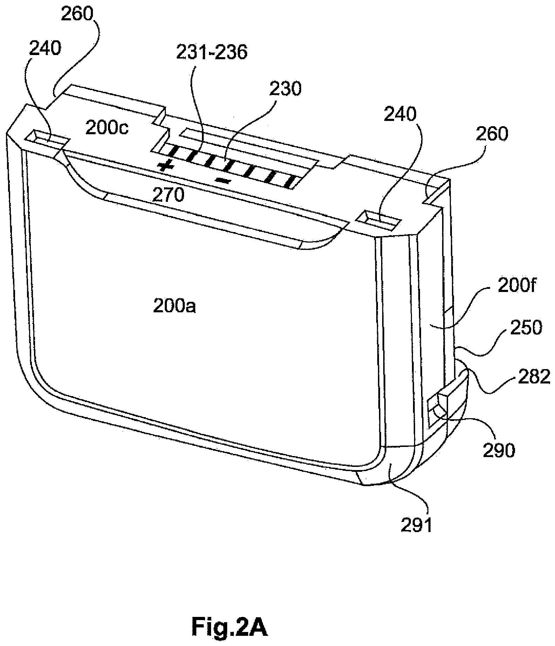

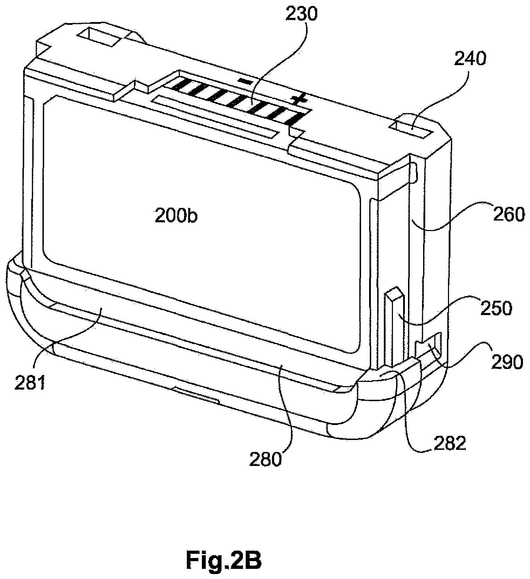

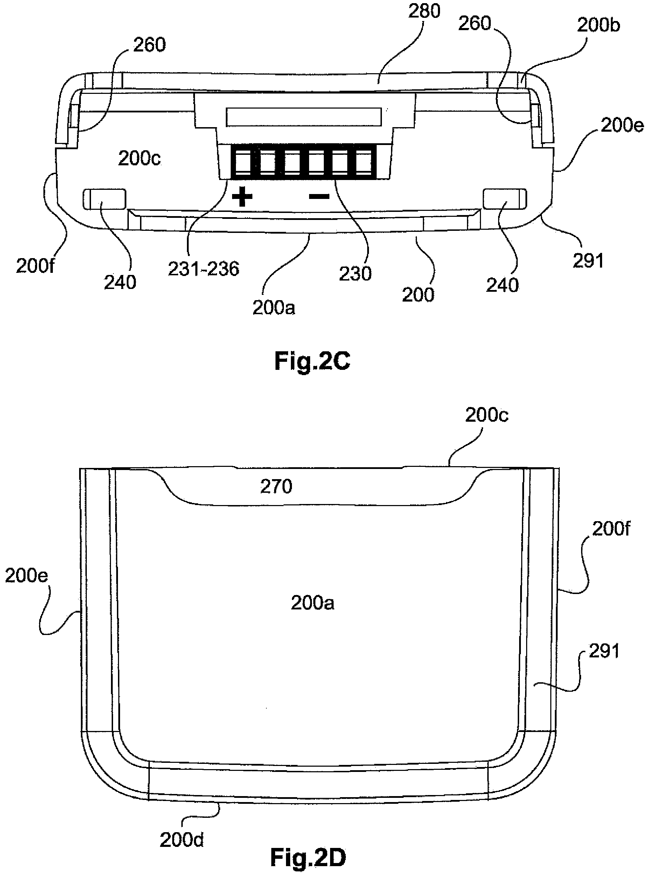

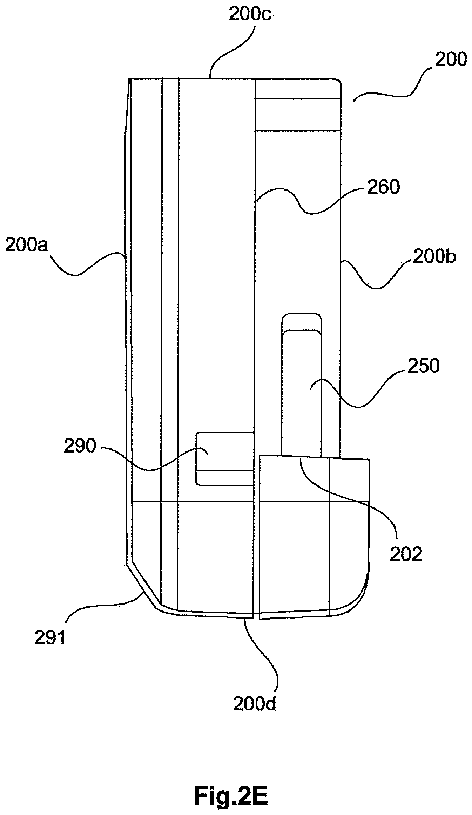

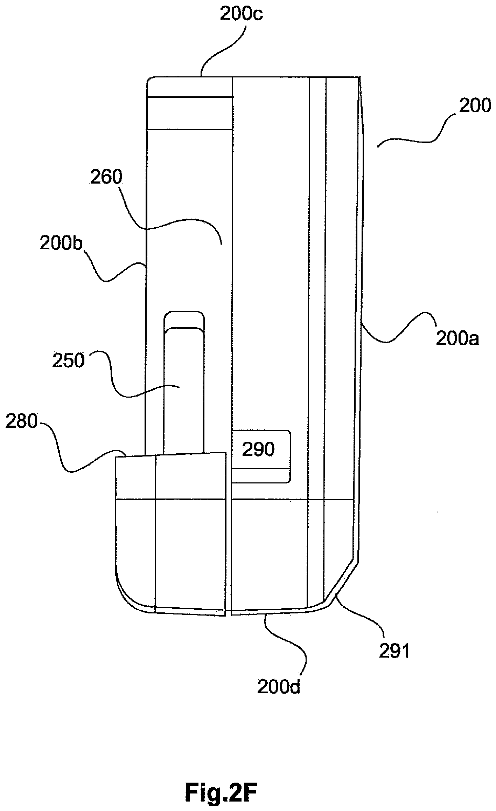

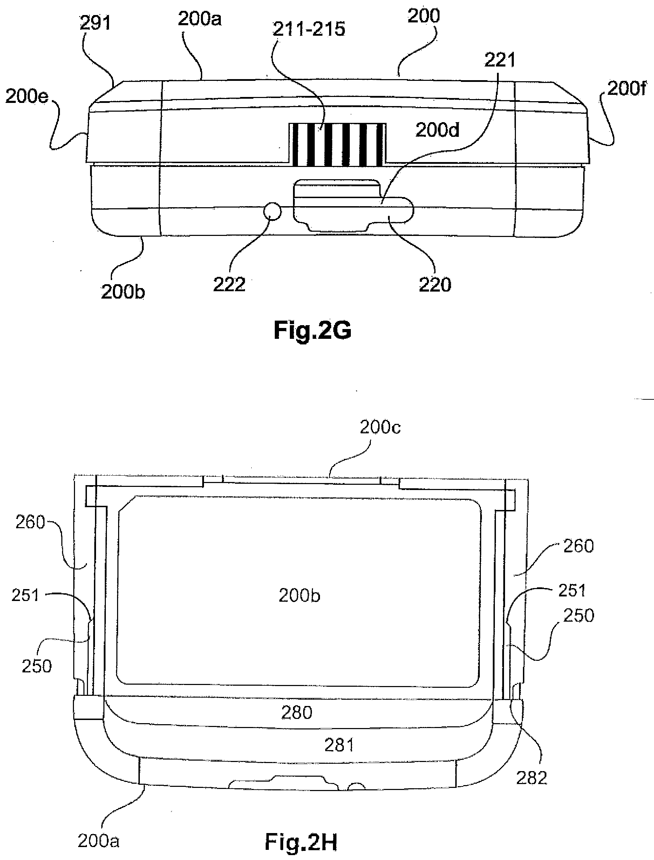

Fig. 2A - 2H zeigen verschiedene Ansichten eines Akkumulators für einen Taschensender nach Fig. 1A - 1G gemäß einem zweiten Ausführungsbeispiel. Der Akkumulator 200 für den Drahtlos-Taschensender weist eine Vorderseite 200a, eine Rückseite 200b, eine Oberseite 200c, eine Unterseite 200d, eine linke Seite 200e und eine rechte 200f auf. Ferner weist der Akkumulator 200 fünf elektrische Kontakte 210, 211 - 215 an seiner Unterseite 200d auf. Zusätzlich zu den elektrischen Kontakten 210 weist der Akkumulator einen Mikro-USB-Anschluss 220 mit einer Abdeckung 221 auf der Unterseite 200d auf. Ferner weist der Akkumulator 200 an seiner Oberseite 200c sechs elektrische Kontakte 230, 231 - 236 auf. An der Oberseite 200c sind zwei Ausnehmungen 240 für Rasthaken 174 des Taschensenders 100 vorgesehen. An der linken und rechten Seite 200e, 200f ist jeweils ein Vorsprung 250 vorgesehen. An der rechten und linken Seite 200f, 200e ist ferner jeweils eine Ausnehmung 260 vorgesehen. Die Ausnehmung 260 erstreckt sich von der Stufe 282 aus entlang der restlichen Länge der linken und rechten Seite 200e, 200f. An der Vorderseite 200a des Akkumulators 200 ist eine Ausnehmung 270 und zwar im oberen Bereich vorgesehen. Die Ausnehmung 270 kann als eine wannenförmige Ausnehmung 270 ausgestaltet sein. Diese Ausnehmung 270 kann mit dem Vorsprung 111 auf der Vorderseite 110 des Taschensenders 100 derart zusammenwirken, dass der Vorsprung 111 im eingebauten Zustand des Akkumulators 200 in die Ausnehmung 270 hinein reicht und somit verhindert, dass der Akkumulator 200 nach vorne bzw. nach außen kippen kann. Somit kann ein Verkippschutz gewährleistet werden.

Auf der Rückseite 200b des Akkumulators 200 kann ein Vorsprung 280 vorgesehen sein, welcher wiederum eine (wannenförmige) Ausnehmung 281 im unteren Bereich aufweisen kann. Diese Ausnehmung kann mit dem Vorsprung 122 auf der Rückseite 120 des Taschensenders 100 zusammenwirken. Der Vorsprung 280 erstreckt sich auf der Rückseite 200b und der rechten und linken Seite 200e, 200f. Der Vorsprung 250 ist an seinem ersten Ende an den Vorsprung 280 gekoppelt.

Der Akku 200 weist an seiner Oberseite 200c sechs Kontakte 231 - 236 auf. An der Unterseite des Akkus 200d sind fünf Kontakte 211 - 215 sowie ein USB (Mikro-) Anschluss 220 vorgesehen. Ferner kann eine Kontroll-LED 222 vorgesehen sein, welche beispielsweise aufleuchtet, wenn der Akku über den USB-Anschluss aufgeladen wird. An den Seitenflächen 200f, 200e ist jeweils im unteren Bereich eine Ausnehmung 290 vorgesehen, welche mit Rasthaken einer Ladestation zusammenwirken kann, um den Taschensender 100 fest in der Ladestation zu halten. Der Akku 200 weist auf seiner Vorderseite 200a eine Fase 291 auf, welche sich an den beiden Seiten 200e, 200f sowie an der Unterseite 200d erstreckt. An der Rückseite 200b ist im unteren Bereich ein Vorsprung 280 mit einer wannenförmigen Ausnehmung 281 vorgesehen. Auf den beiden Seiten 200e, 200f ist um unteren Bereich jeweils ein Vorsprung 250 vorgesehen.

Der Akku ist z.B. 4,1 cm hoch und der Vorsprung 250 ist z.B. 1,1 cm lang. Der Vorsprung 250 kann z. B. zwischen 10 % und 80 % der Länge des Akkumulators bzw. der Länge der Ausnehmung 260 betragen. Dies führt zur Verbesserung des Sitzes des Akkus 200 in dem Taschensender.

An seinem oberen Ende weist der Vorsprung eine Fase 251 auf. An seiner Oberseite 200c sind links und rechts zwei Ausnehmungen 240 vorgesehen, welche mit Rasthaken 174 des Taschensenders 100 zusammenwirken, damit der Akku 200 sicher gehalten wird. An der Rückseite 200b ist die wannenförmige Ausnehmung 281 in dem Vorsprung 280 in dem rückwärtigen unteren Ende 281 vorgesehen. An der linken und rechten Seite ist eine Stufe 282 vorgesehen. Die Stufe 282 ist sowohl bezüglich des Vorsprungs 250 als auch der inneren Seitenflächen 260 vorhanden. Die Ausnehmung 290 ist zum Element bzw. Ausnehmung 260 hin offen. Die Ausnehmung 290 wird somit erst geschlossen, wenn der Akku in den Taschensender eingeführt wird.

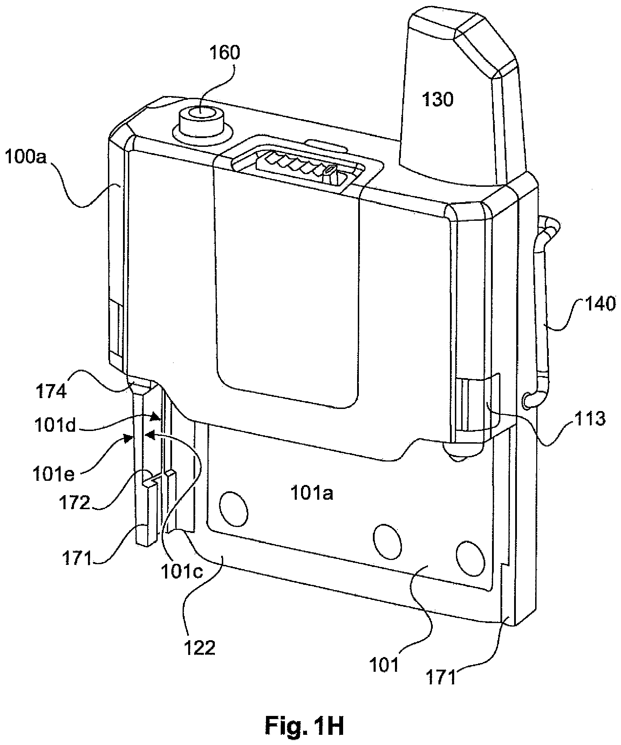

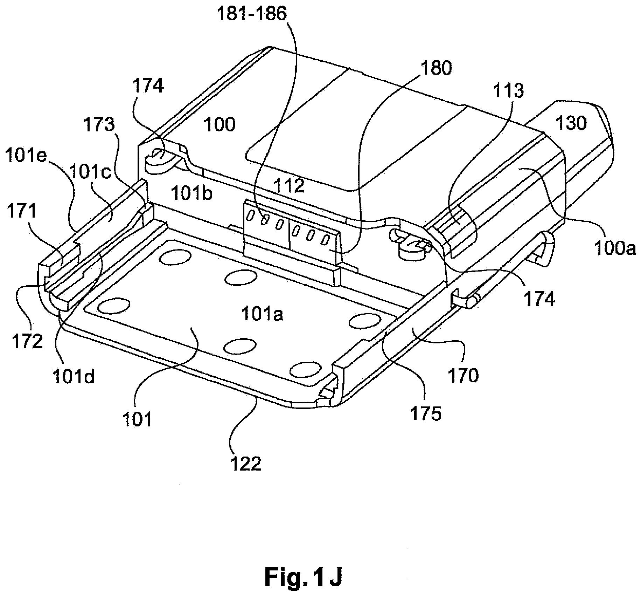

In den Fig. 1J und 1H ist der Taschensender 100 jeweils ohne Akku 200 dargestellt.

Der Taschensender 100 weist zwei Seitenflächen 170 auf, welche an ihrer Innenseite und unten zwei Vorsprünge 171 aufweisen, so dass zwischen den beiden Vorsprüngen 171 ein Durchgang 172 vorgesehen ist (s. Fig. 1J). Dieser Durchgang 172 ist an den Vorsprung 250 angepasst, so dass der Akku 200 von unten eingeführt wird, wobei der Vorsprung 250 auf beiden Seiten in den Durchgang 172 auf beiden Seiten eingeführt werden kann. Wenn die Rasthaken 174 in die Ausnehmungen 240 eingerastet sind, dann ist der Akku 200 sicher befestigt und der Vorsprung 250 liegt sicher in dem Durchgang 172, so dass ein Verkippen des Akkus vermieden werden kann. Ferner kann durch die Ausgestaltung des Vorsprungs 112, welche in die Ausnehmung 270 auf der oberen Vorderseite des Akkus eingreift, vermieden werden, dass der Akku nach außen kippen kann. Auf den Seiten 170 ist an der Innenfläche ein Vorsprung 173 in Form einer Rampe vorgesehen (s. Fig. 1J). Der Abstand zwischen dem Vorsprung 250 und der Seitenfläche 200f, 200e ist so angepasst, dass der Akku beim Einführen auf dem oberen Ende 175 der Seitenfläche aufliegt.

Der Taschensender weist auf seiner Vorderseite ebenfalls eine Fase 100a auf, welche an die Fase 291 des Akkus angepasst ist.

Die Rasthaken 174 können durch die Elemente 113 betätigt werden.

Um den Akkumulator 200 in das Aufnahmefach 101 des Taschensenders 100 einzulegen, kann der Akkumulator 200 mit seiner Rückseite 200b auf den Vorsprung 122 (welcher über die Seitenwände 170 des Aufnahmeraumes 101 hinaus ragt) aufgelegt werden. Damit ist der Akkumulator 200 bereits zum Einschieben in den Aufnahmeraum 101 ausgerichtet, so dass der Akkumulator 200 lediglich in Richtung der Rasthaken 174 bzw. der elektrischen Kontakte 180 geschoben wird. Dabei werden die beiden Vorsprünge 250 in den Durchgang 172 zwischen den beiden Vorsprüngen eingefädelt. Der Vorsprung 250 verbleibt dann in dem Durchgang 172 zwischen den Führungen 171, so dass der Akkumulator 200 fest in dem Aufnahmeraum 101 anliegt.

Damit wird der Akkumulator durch das Platzieren auf den Vorsprung 122 zunächst ausgerichtet und in einer Bewegungsrichtung bzw. in eine Richtung in das Aufnahmefach 101 eingeführt, wobei der Akkumulator 200 über die volle Länge, die durch den Abstand zwischen der Stufe 282 und der Oberseite 200c definiert ist, in Richtung der elektrischen Kontakte 180 geschoben werden muss.

Alternativ dazu kann der Akkumulator 200 von oben in den nach oben offenen Aufnahmeraum 101 platziert werden und dann in Richtung der Rasthaken 174 bzw. der elektrischen Kontakte 180 komplett in den Aufnahmeraum 101 eingeführt werden, bis es optional zu einem Einrasten der Rasthaken 174 kommt. In diesem Fall verläuft das Einführen des Akkumulators 200 in das Aufnahmefach 101 in zwei Bewegungsrichtungen, nämlich zunächst nach unten in den Aufnahmeraum und dann parallel zum Aufnahmeraum bzw. in Richtung der elektrischen Kontakte 180. Die Vorsprünge 250 erstrecken sich dazu in ihrer Länge von der Stufe 282 aus in Richtung der Oberseite 200c vorzugsweise maximal 50 % von der Strecke, die durch den Abstand zwischen der Stufe 282 und der Oberseite 200c definiert ist. Das Einführen des Akkumulators 200 wird durch die beschränkte Länge der Vorsprünge 250 vereinfacht, da die Bewegung des Akkumulators 200 in Richtung der elektrischen Kontakte 180 nicht mehr über die volle Länge, die durch den Abstand zwischen der Stufe 282 und der Oberseite 200c definiert ist, ausgeführt werden muss, sondern nur noch über die Länge der Vorsprünge 250. Die Länge der Vorsprünge 250 kann im Bereich von 10 % bis 80 % der Strecke von der Stufe 282 bis zur Oberseite 200c liegen. Die Vorsprünge 250 beginnen an der Stufe 282

Gemäß der Erfindung kann der Akkumulator 200 in dem Vorsprung-freien Bereich in den Aufnahmeraum 101 platziert werden, so dass die Ausnehmungen 260 auf den Seitenwänden 170 aufliegen. Die Seitenwände 170 dienen ebenfalls dazu, den Akkumulator 200 sicher in dem Aufnahmefach 101 zu halten.

Gemäß der Erfindung weist der Akkumulator 200 die Ausnehmung 270 auf, welche mit dem Vorsprung 112 zusammenwirkt (die Ausnehmung 270 ist an den Vorsprung 112 angepasst), so dass der Akkumulator 200 sicher in den Aufnahmeraum 101 platziert werden kann. Durch den Vorsprung 112, welcher in die Ausnehmung 270 eingreift, kann sichergestellt werden, dass der Akkumulator 200, welcher sich in dem Aufnahmeraum 101 befindet, nicht nach außen verkippen kann bzw. ohne Weiteres entfernt werden kann.

Gemäß der Erfindung ist die Akkumulatoreinheit 200 mittels der Rasthaken 174, des Vorsprungs 112 und der Führungen 171 (mit dem Durchgang 172) sicher in dem Aufnahmeraum 101 gehalten.

Ferner dient der Vorsprung 280 (und der Abschnitt 282 des Vorsprungs 280 auf der linken und rechten Seite 200e, 200f) zur Verbesserung des Sitzes des Akkus in dem Taschensender.

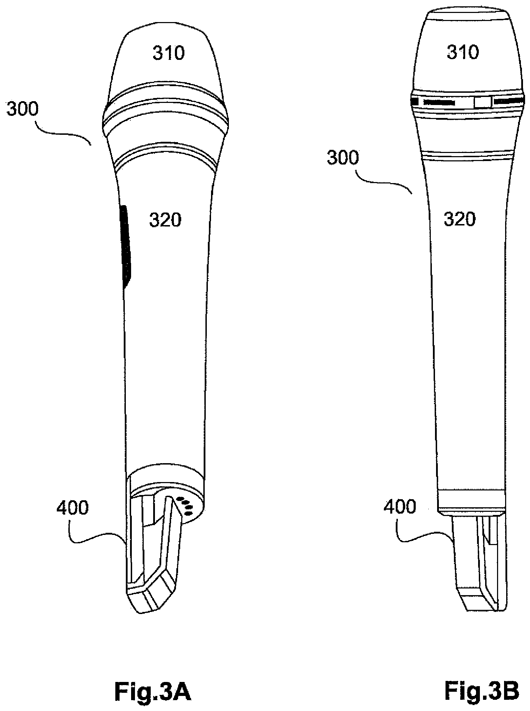

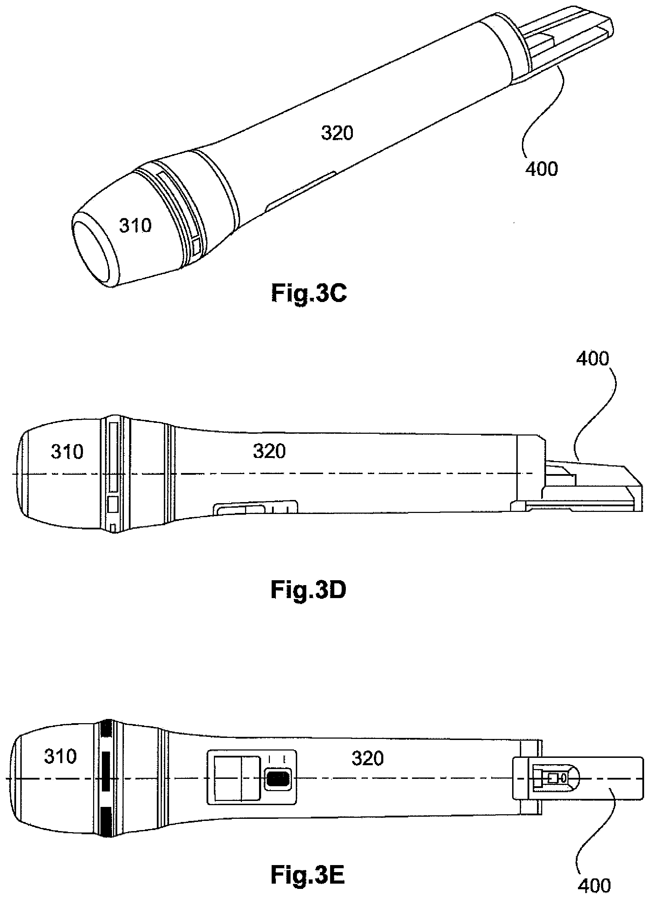

Fig. 3A - 3E zeigen verschiedene Ansichten eines nicht beanspruchten Drahtlos-Mikrofons. Das Mikrofon 300 weist einen Mikrofonkopf 310, einen Mikrofongriff 320 sowie ein Ende 330 auf. An dem Ende 330 ist ein Vorsprung vorgesehen, welcher in das Element 411a eingreifen kann und somit das Ende 411 des Akkus sicher halten kann.

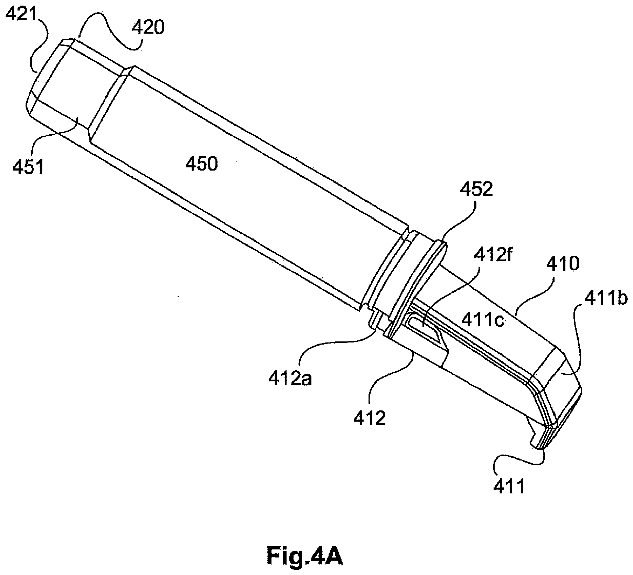

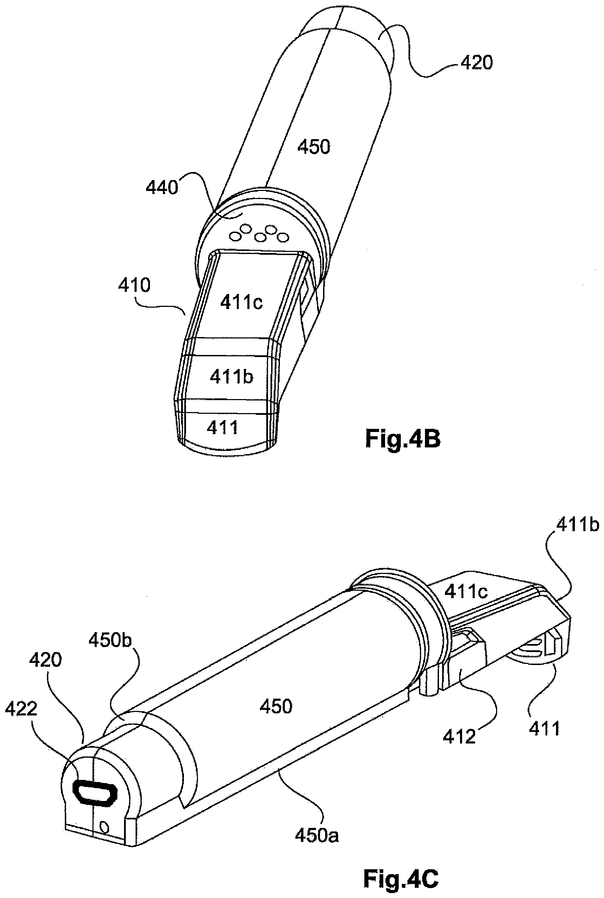

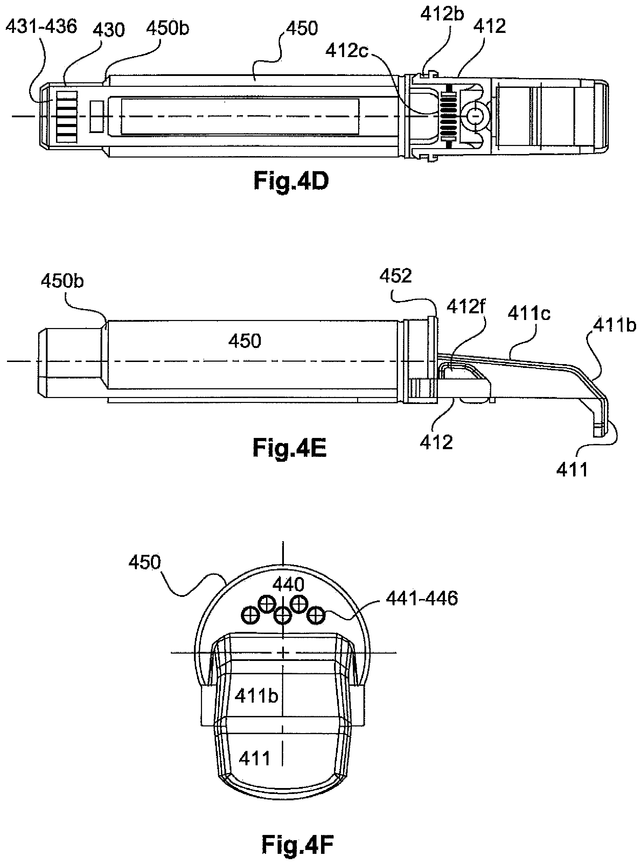

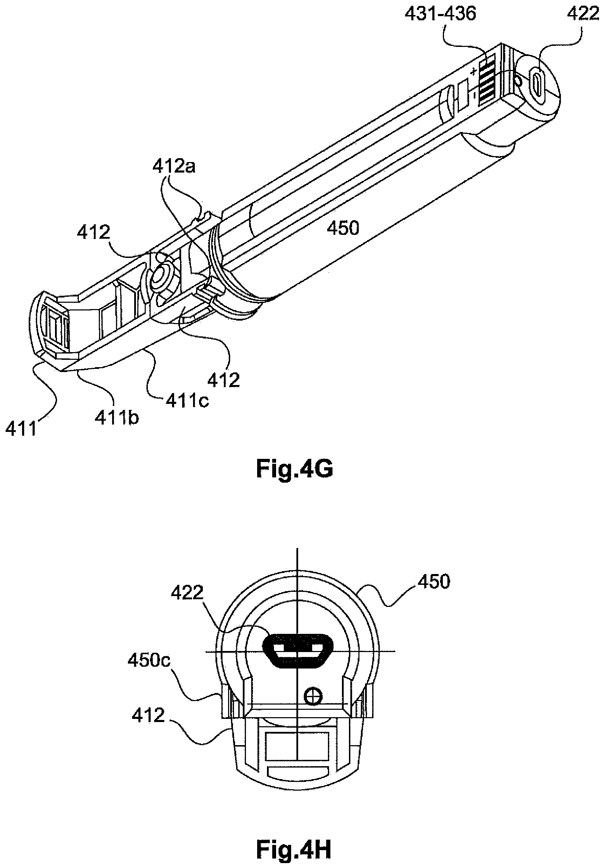

Fig. 4A - 4H zeigen jeweils verschiedene Ansichten eines Akkumulators für das Drahtlos-Mikrofon von Fig. 3A - 3D. Der Akkumulator 400 weist ein erstes Ende 410 mit einem schrägen Abschnitt 411, 411b, einem geraden Abschnitt 411c und einer Auslöseeinheit 412 auf, welche zwei Rasthaken 412a bzw. eine Ausnehmung 412b und eine Feder 412c aufweist, welche die beiden Rasthaken 412 nach außen drückt. Oberhalb der Auslöseeinheit 412 ist jeweils eine Ausnehmung 412f vorgesehen, welche es ermöglicht, die Elemente 412 zusammen zu drücken. Durch Zusammendrücken der Elemente 412 kann der Akkumulator 400 aus dem Gehäuse 320 entfernt werden. Das Gehäuse 320 weist dazu eine Ausnehmung auf, in welche die Haken 412b eingreifen können.

Der Akku 400 weist an seinem zweiten Ende 420 eine USB-Buchse bzw. einen USB-Ladeanschluss 422 auf, um ein Aufladen des Akkus 400 über einen USB-Anschluss zu ermöglichen. Ferner sind sechs elektrische Ladekontakte 430, 431 - 436 vorgesehen. Der Akku 400 weist ein Mittelteil 450 auf, welches zwischen der 4-Uhr-Position und der 8-Uhr-Position - entgegen dem Uhrzeigersinn - im Querschnitt rund ist. Ferner ist der Abschnitt 450a zwischen der 4-Uhr- und der 8-Uhr-Position im Uhrzeigersinn vorgesehen, der nicht rund ausgestaltet ist. Ferner sind die Abschnitte 450b und 451 an dem zweiten Ende 420 vorgesehen. Des Weiteren sind die Ecken 450c und die Rundung 450d vorgesehen.

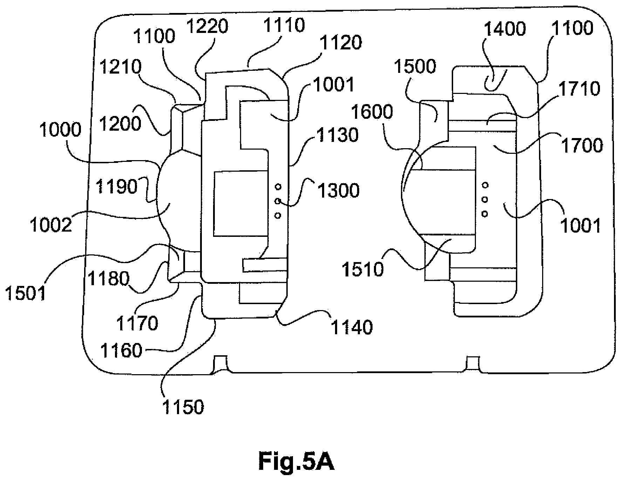

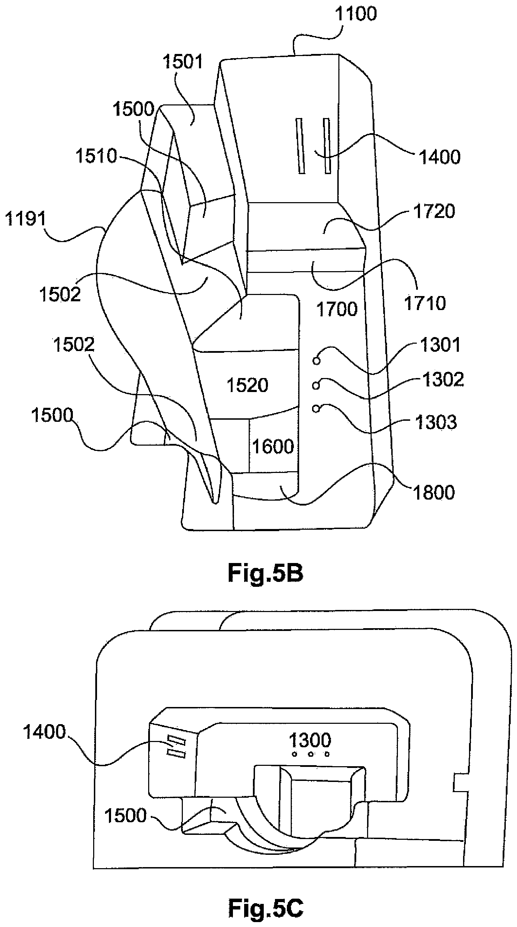

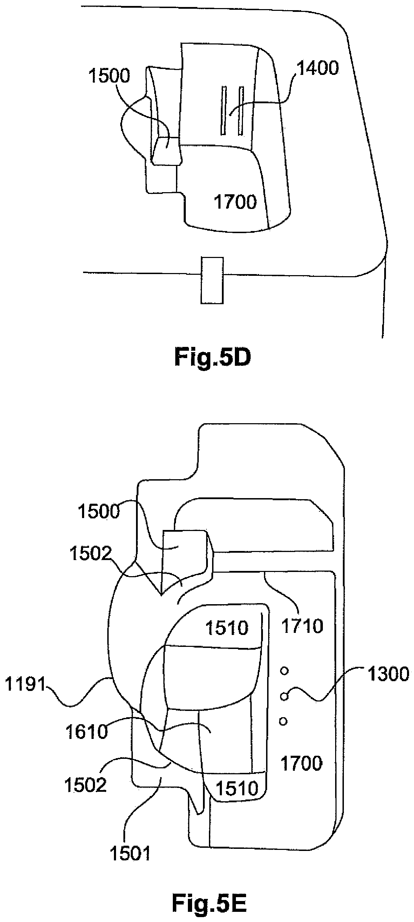

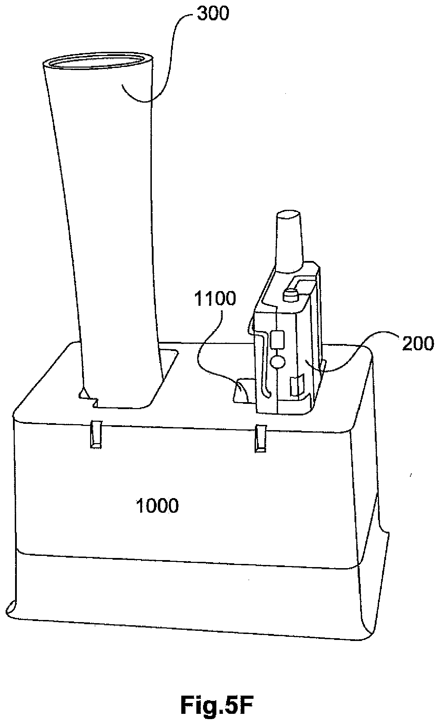

An einem ersten Ende 452 des Mittelteils 450 sind elektrische Ladekontakte 440 vorgesehen. Insbesondere sind fünf Ladekontakte 441 - 446 vorgesehen. Durch diese Ladekontakte kann der Akkumulator 400 in der in Fig. 5A - 5G beschriebenen Ladeeinheit aufgeladen werden.

An dem zweiten Ende 420 bzw. an der Stirnseite 421 des zweiten Endes 420 ist der USB-Ladeanschluss 422 vorgesehen. Auf der Unterseite des zweiten Endes 420 ist eine elektrische Kontakteinheit 430 mit sechs elektrischen Anschlüssen 431 - 436 vorgesehen.

Fig. 5A - 5G zeigen verschiedene Ansichten einer nicht beanspruchten Ladeeinheit. Die Ladeeinheit 1000 weist mindestens einen Ladeschacht 1100 auf. Der Ladeschacht 1100 weist einen ersten Abschnitt 1110, einen zweiten Abschnitt 1120 (eine Fase), einen dritten Abschnitt 1130, einen vierten Abschnitt 1140 (eine Fase), einen fünften Abschnitt 1150, einen sechsten Abschnitt 1160, einen siebten Abschnitt 1170, einen achten Abschnitt 1180, eine neunten Abschnitt 1190, einen zehnten Abschnitt 1200, einen elften Abschnitt 1210 und einen zwölften Abschnitt 1220 auf. Der erste und fünfte Abschnitt 1110, 1150 sind parallel zueinander angeordnet. Ferner sind der sechste und der zwölfte Abschnitt 1160, 1122 parallel zu dem dritten Abschnitt 1130 angeordnet. Ferner sind der achte Abschnitt 1180 und der zehnte Abschnitt 1200 parallel zu dem dritten Abschnitt 1130 angeordnet. Der neunte Abschnitt 1190 ist zumindest abschnittsweise rund angeordnet. In dem Schacht 1100 sind optional zwei Rasthaken 1400, zwei Vorsprünge 1500 sowie ein erster Boden 1700 optional mit zwei Vorsprüngen 1710 vorgesehen. Die beiden Vorsprünge 1500 sind im Bereich des siebten und achten Abschnitts 1170, 1180 sowie im Bereich des zehnten und elften Abschnitts 1200, 1210 vorgesehen. Der erste Boden 1700 wird von dem ersten Abschnitt, dem zweiten Abschnitt, dem dritten Abschnitt, dem vierten Abschnitt und dem fünften Abschnitt 1110 - 1150 umschlossen.

Zwischen dem Abschnitt 1500 und dem Boden 1700 ist auf beiden Seiten jeweils eine Schräge 1800 vorgesehen. Zwischen dem ersten Abschnitt 1110 und dem ersten Boden 1700 kann optional eine Schräge 1720 vorgesehen sein. Im Bereich des neunten Abschnitts 1190 ist ein zweiter Schacht 1600 vorgesehen.

Die Ladeschale 1000 bzw. Ladeeinheit ist so ausgestaltet, dass sie mindestens einen Schachtabschnitt 1002 zur Aufnahme eines Drahtlos-Mikrofons und einen Schachtabschnitt 1001 zur Aufnahme eines Taschensenders mit Akku aufweist. In dem Schacht ist ein erster Schachtabschnitt 1001 vorgesehen zur Aufnahme des Taschensenders. Hier ist auf beiden Seiten ein Rasthaken 1400 vorgesehen, welcher jeweils in eine Ausnehmung 290 an bzw. in einer Seitenfläche des Akkus 200 des Taschensenders eingreift, um den Taschensender 200 in dem Schacht sicher halten zu können. Wenn der Taschensender 200 mit dem Akku 300 aus dem Schacht entfernt werden soll, dann muss zunächst der Widerstand überwunden werden, welcher durch den Rasthaken 1400, der in die Ausnehmung 290 eingreift, erzeugt wird.

Der Schacht weist an seinem ersten Ende eine Fase 1120, 1140 auf, welche an die Fase 291 angepasst ist. Diese Fase 291 verläuft auf der Seite 200a und verläuft auf der Seite 200f, 200d, 200e. In dem ersten Schachtabschnitt sind drei elektrische Kontakte 1300, 1301 - 1303 vorgesehen, welche federgelagert sein können. Diese drei elektrischen Kontakte 1301 - 1303 kontaktieren drei der fünf elektrischen Kontakte 211 - 215 an der Unterseite 200d des Akkus 200. Der Akku 200 weist an seiner oberen Seite 200c sechs Kontakte 231 - 236 auf.

In dem ersten Schachtabschnitt 1001 ist ein Boden 1700 vorgesehen, in bzw. an welchem die drei federgelagerten elektrischen Kontakte vorgesehen sind.

Der Taschensender 100 weist auf seiner Rückseite einen Befestigungsbügel 140 auf. In dem ersten Schacht sind zwei Ausnehmungen 1500 im Bereich des zehnten und elften Abschnitts 1200, 1210 sowie im Bereich des siebten und achten Abschnitts 1170, 1180 vorgesehen. Wenn der Taschensender mit dem Bügel 140 eingeführt wird, dann kann der Bügel 140 in den zwei Ausnehmungen 1500 aufliegen. Im unteren Bereich dieser Ausnehmung ist links und rechts ein Vorsprung 1500 vorgesehen, welcher ungefähr in der Höhe endet, wo der Bügel 140 ebenfalls endet, wenn der Taschensender in dem Schacht platziert ist. Diese beiden Vorsprünge 1500 weisen an ihrer Innenseite jeweils eine kreissegmentförmige Ausnehmung 1520 auf. Am zweiten Ende des Schachtes ist eine Ausnehmung 1191 vorgesehen, welche an das Gehäuse des Drahtlosmikrofons angepasst ist. Links und rechts an der Ausnehmung ist zunächst eine Schräge 1510 vorgesehen, wonach dann ein gerader Abschnitt 1520 folgt. Die Seite, wo die drei elektrischen Kontakte 1300 vorgesehen sind, ist zunächst gerade ausgestaltet und im unteren Bereich ist eine Schräge 1600 vorgesehen. Lediglich ein Bereich, welcher zum zweiten Ende hin kreissegmentförmig ausgestaltet ist, ist gerade ausgestaltet. Der kreissegmentförmige Ausschnitt geht in die Schräge 1510 links und rechts über. Die Schräge 1510 erstreckt sich von dem Ende, wo die elektrischen Kontakte vorgesehen sind, bis zu der kreissegmentförmigen Ausnehmung auf der zweiten Seite, wo das Mikrofon platziert wird. Optional können Führungen in der kreissegmentförmigen Ausnehmung vorhanden sein.

Im Bereich des ersten Schachtes für den Taschensender sind die linken und rechten Seiten unten rund ausgestaltet und weisen jeweils einen länglichen Vorsprung auf. Die Unterseite des Taschensenders bzw. des Akkus wird auf diesen beiden länglichen Vorsprüngen platziert, so dass die federgelagerten elektrischen Pins in die elektrischen Kontakte des Akkus eingreifen können. Durch diese beiden länglichen Vorsprünge kann der Abstand zwischen den elektrischen Kontakten 211 - 215 und der Unterseite 200d ausgeglichen werden.

Die drei elektrischen federgestützten Kontakte dienen auch der elektrischen Kontaktierung des Akkus des Drahtlosmikrofons des Taschensenders. Der Akku 400 weist an seiner Unterseite fünf Kontakte 440 auf, wobei drei dieser Kontakte durch die elektrischen Stifte der elektrischen Kontakte 1300 kontaktiert werden können, um den Akku aufzuladen. Damit stellen die elektrischen (Lade)Kontakte 1300 gemeinsame (Lade)Kontakte sowohl für das Drahtlos-Mikrofon als auch für den Taschensender dar. In dem Ladeschacht kann also nur eines von beiden geladen werden.

Links und rechts für den Schacht für das Mikrofon sind Einführ- und/oder Ausrichtschrägen vorgesehen, welche der Einfuhr und Ausrichtung des Mikrofons dienen, damit das Mikrofon korrekt eingeführt und ausgerichtet wird, damit die drei Stifte mit den richtigen der fünf Anschlüsse in Kontakt kommen.

Ferner sind zwei Schultern vorgesehen, auf welchen der Bügel 140 ruhen kann, wenn der Taschensender eingeführt ist. Der Ausnehmungsgrund ist an das Ende 411 der Akkueinheit angepasst. Im Bereich des Ausnehmungsgrundes ist eine Endschräge bzw. Grundschräge vorgesehen.

Durch die Ausgestaltung der Schrägen wird erzwungen, dass das Mikrofon beim Einführen derart fluchtend ausgestaltet ist, dass die drei elektrischen Pins mit den entsprechenden elektrischen Kontakten des Akkus in Kontakt kommen.

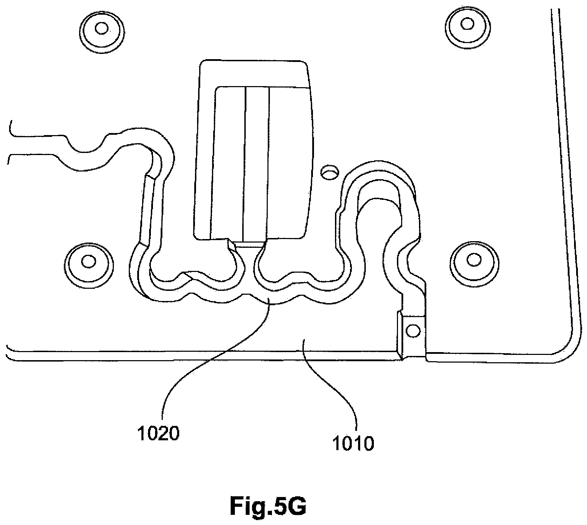

In Fig. 5G ist die Unterseite 1010 der Ladeeinheit 1000 mit einer Kabelführung 1020 gezeigt. Die Kabelführung 1020 ermöglicht eine Kabelführung eines elektrischen Anschlusskabels von zwei Seiten der Ladeeinheit.

## Patentansprüche

1. Drahtlos-Taschensender (100), insbesondere Drahtlos-Gitarrentaschensender oder Drahtlos-Mikrofon-Taschensender, mit
einer Antenne (130) zum drahtlosen Senden eines über den Audioeingang (160) empfangenen Audiosignals,
einer Rückseite (120), einer Vorderseite (110), einer Oberseite (150) und
einem Aufnahmefach (101) für einen Akkumulator (200), das eine Rückwand (101a), welche zumindest teilweise Teil der Rückseite (120) bildet, zwei Seitenflächen (101c) und einen Anschlussabschnitt (101b) mit elektrischen Kontakten (180, 181-186) aufweist,
wobei die zwei Seitenflächen (101c) jeweils mit einer ersten Seite (101d) mit der Rückwand (101a) gekoppelt sind,
wobei die zwei Seitenflächen (101c) mit einem ersten Ende mit dem Anschlussabschnitt (101b) gekoppelt sind,
wobei zweite Enden der Seitenflächen (101c) jeweils eine Führung (171, 172) für den Akkumulator (200) aufweisen,
wobei sich die Führung (171, 172) nicht entlang der gesamten Länge der Seitenflächen (101c) erstreckt und zwei Vorsprünge (171) und einen Durchgang (172) dazwischen aufweist,
**gekennzeichnet durch** einen Audioeingang (160) zum Empfangen eines Audiosignals,
wobei die Seitenflächen (101c) an ihrem ersten Enden jeweils eine Rampe (173) aufweisen.

2. Drahtlos-Taschensender (100) nach Anspruch 1, wobei
die Seitenflächen (101c) jeweils eine zweite Seite (101e) aufweisen, die der ersten Seite gegenüberliegt und als eine Auflagefläche (175) für den Akkumulator (200) dient.

3. Drahtlos-Taschensender nach Anspruch 1 oder 2, wobei
der Anschlussabschnitt (101b) einen Vorsprung (112) aufweist, der sich im Wesentlichen parallel zu der Rückwand (101a) erstreckt.

4. Drahtlos-Taschensender nach einem der Ansprüche 1 bis 3, wobei
die Rückwand (101a) eine Einfädelhilfe oder Einführhilfe in Form eines Vorsprungs (122) aufweist.

5. Akkumulatoreinheit für einen Drahtlos-Taschensender, insbesondere nach einem der Ansprüche 1 bis 4, mit
einer Vorderseite (200a), einer Rückseite (200b), einer linken und rechten Seite (200e, 200f), einer Oberseite (200c) und einer Unterseite (200d),
**gekennzeichnet durch** einen Vorsprung (280) im Bereich der Unterseite (200d) und entlang der Rückseite (200b) sowie zumindest teilweise entlang der linken und rechten Seite (200e, 200f),
jeweils einer Ausnehmung (260) an der rechten und linken Seite (200f, 200e) zu der Rückseite (200b) hin, und
jeweils einem Vorsprung (250) in den beiden Ausnehmungen (260), der mit einem ersten Ende mit dem Vorsprung (280) verbunden ist und der sich teilweise, insbesondere zwischen 10 % und 80 %, entlang der Ausnehmung (260) erstreckt.

6. Akkumulatoreinheit nach Anspruch 5, ferner mit
einer elektrischen Ladekontakteinheit (210, 211-215) und einem USB-Ladeanschluss (220) auf der Unterseite (200d).

7. Akkumulatoreinheit nach Anspruch 5 oder 6, ferner mit
einer elektrischen Kontakteinheit (230) mit sechs Kontakten (231-236) an der Oberseite (200c),
wobei die elektrische Ladekontakteinheit (210, 211-215) sechs Ladekontakte aufweist.

8. Akkumulatoreinheit nach einem der Ansprüche 5 bis 7, ferner mit
einer Ausnehmung (270) an der Vorderseite (200a).

9. Akkumulatoreinheit nach einem der Ansprüche 5 bis 8, wobei der Vorsprung (280) im Bereich der Rückseite (200b) eine Ausnehmung (281) aufweist.

10. Verwendung einer Akkumulatoreinheit in einem Drahtlos-Taschensender, insbesondere nach einem der Ansprüche 1 bis 4, wobei die Akkumulatoreinheit eine Vorderseite (200a), eine Rückseite (200b), eine linke und rechte Seite (200e, 200f), eine Oberseite (200c) und eine Unterseite (200d), einen Vorsprung (280) im Bereich der Unterseite (200d) und entlang der Rückseite (200b) sowie zumindest teilweise entlang der linken und rechten Seite (200e, 200f) jeweils eine Ausnehmung (260) an der rechten und linken Seite (200f, 200e) zu der Rückseite (200b) hin und jeweils einen Vorsprung (250) in den beiden Ausnehmungen (260), der mit einem ersten Ende mit dem Vorsprung (280) verbunden ist und der sich teilweise, insbesondere zwischen 10 % und 80 %, entlang der Ausnehmung (260) erstreckt, aufweist.

## Claims

1. A wireless pocket transmitter (100), in particular a wireless guitar pocket transmitter or a wireless microphone pocket transmitter, comprising
an antenna (130) for wirelessly transmitting an audio signal received by way of the audio input (160),
a rear side (120), a front side (110), and a top side (150), and
a receiving compartment (101) for a rechargeable battery (200), that has a rear wall (101a) which at least partially forms part of the rear side (120), two side surfaces (101c) and a connecting portion (101b) with electrical contacts (180, 181-186),
wherein the two side surfaces (101c) are respectively coupled with a first side (101d) to the rear wall (101a),
wherein the two side surfaces (101c) are coupled with a first end to the connecting portion (101b),
wherein second ends of the side surfaces (101c) each have a respective guide (171, 172) for the rechargeable battery (200),
wherein the guide (171, 172) does not extend along the entire length of the side surfaces (101c) and has two projections (171) and a passage (172) therebetween,
**characterized by** an audio input (160) for receiving an audio signal,
wherein the side surfaces (101c) have at their first ends a respective ramp (173).

2. A wireless pocket transmitter (100) as set forth in claim 1 wherein
the side surfaces (101c) each have a second side (101e) which is opposite to the first side and serves as a support surface (175) for the rechargeable battery (200).

3. A wireless pocket transmitter as set forth in claim 1 or claim 2 wherein
the connecting portion (101b) has a projection (112) extending substantially parallel to the rear wall (101a).

4. A wireless pocket transmitter as set forth in one of claims 1 through 3 wherein
the rear wall (101a) has an insertion aid or introduction aid in the form of a projection (122).

5. A rechargeable battery unit for a wireless pocket transmitter, in particular as set forth in one of claims 1 through 4, comprising
a front side (200a), a rear side (200b), a left and a right side (200e, 200f), a top side (200c) and an underside (200d),
**characterized by** a projection (280) in the region of the underside (200d) and along the rear side (200b) and at least partially along the left and right sides (200e, 200f),
a respective recess (260) at the right and left sides (200f, 200e) towards the rear side (200b), and
a respective projection (250) in the two recesses (260) which is connected with a first end to the projection (280) and which extends partially, in particular between 10% and 80%, along the recess (260).

6. A rechargeable battery unit as set forth in claim 5 and further comprising
an electrical charging contact unit (210, 211-215) and a USB charging port (220) on the underside (200d).

7. A rechargeable battery unit as set forth in claim 5 or claim 6 and further comprising
an electrical charging contact unit (230) having six contacts (231-236) at the top side (200c),
wherein the electrical charging contact unit (210, 211-215) has six charging contacts.

8. A rechargeable battery unit as set forth in one of claims 5 through 7 and further comprising
a recess (270) at the front side (200a).

9. A rechargeable battery unit as set forth in one of claims 5 through 8 wherein the projection (280) has a recess (281) in the region of the rear side (281).

10. Use of a rechargeable battery unit in the wireless pocket transmitter, in particular as set forth in one of claims 1 through 4, wherein the rechargeable battery unit has a front side (200a), a rear side (200b), a left and a right side (200e, 200f), a top side (200c) and an underside (200d), a projection (280) in the region of the underside (200d) and along the rear side (200b) and at least partially along the left and right sides (200e, 200f), a respective recess (260) at the right and left sides (200f, 200e) towards the rear side (200b), and a respective projection (250) in the two recesses (260) which is connected with a first end to the projection (280) and which extends partially, in particular between 10% and 80%, along the recess (260).

## Revendications

1. Émetteur de poche sans fil (100), en particulier émetteur de poche sans fil de guitare ou émetteur de poche sans fil de microphone, avec
une antenne (130) pour l'émission sans fil d'un signal audio reçu par le biais de l'entrée audio (160),
une face arrière (120), une face avant (110), une face supérieure (150) et
un compartiment de logement (101) pour un accumulateur (200), qui comprend une paroi arrière (101a), qui forme au moins partiellement une partie de la face arrière (120), deux surfaces latérales (101c) et un secteur de branchement (101b) avec des contacts électriques (180, 181-186),
dans lequel les deux surfaces latérales (101c) sont couplées chacune avec un premier côté (101d) à la paroi arrière (101a),
dans lequel les deux surfaces latérales (101c) sont couplées avec une première extrémité au secteur de branchement (101b),
dans lequel des secondes extrémités des surfaces latérales (101c) comprennent chacune un guidage (171, 172) pour l'accumulateur (200),
dans lequel le guidage (171, 172) ne s'étend pas le long de toute la longueur des surfaces latérales (101c) et comprend entre celles-ci deux protubérances (171) et un passage (172),
**caractérisé par** une entrée audio (160) pour la réception d'un signal audio,
dans lequel les surfaces latérales (101c) comprennent chacune à leurs premières extrémités une rampe (173).

2. Émetteur de poche sans fil (100) selon la revendication 1, dans lequel
les surfaces latérales (101c) comprennent chacune un second côté (101e) qui est opposé au premier côté et sert de surface d'appui (175) pour l'accumulateur (200).

3. Émetteur de poche sans fil selon la revendication 1 ou 2, dans lequel
le secteur de branchement (101b) comprend une protubérance (112) qui s'étend sensiblement parallèle à la paroi arrière (101a).

4. Émetteur de poche sans fil selon l'une quelconque des revendications 1 à 3, dans lequel
la paroi arrière (101a) comprend une aide à l'insertion ou une aide à l'introduction sous forme d'une protubérance (122).

5. Unité accumulateur pour un émetteur de poche sans fil, en particulier selon l'une quelconque des revendications 1 à 4, avec
une face avant (200a), une face arrière (200b), une face gauche et une face droite (200e, 200f), une face supérieure (200c) et une face inférieure (200d),
**caractérisée par** une protubérance (280) au niveau de la face inférieure (200d) et le long de la face arrière (200b) ainsi qu'au moins partiellement le long des faces gauche et droite (200e, 200f),
un évidement (260) respectivement au niveau des faces droite et gauche (200f, 200e) vers la face arrière (200b), et
une protubérance (250) respectivement dans les deux évidements (260), qui est reliée avec une première extrémité à la protubérance (280) et qui s'étend partiellement, en particulier entre 10 % et 80 %, le long de l'évidement (260).

6. Unité accumulateur selon la revendication 5, avec en outre
une unité de contact de charge électrique (210, 211-215) et un branchement de charge USB (220) sur la face inférieure (200d).

7. Unité accumulateur selon la revendication 5 ou 6, avec en outre
une unité de contact électrique (230) avec six contacts (231-236) au niveau de la face supérieure (200c),
dans laquelle l'unité de contact de charge électrique (210, 211-215) comprend six contacts de charge.

8. Unité accumulateur selon l'une quelconque des revendications 5 à 7, avec en outre un évidement (270) au niveau de la face avant (200a).

9. Unité accumulateur selon l'une quelconque des revendications 5 à 8, dans laquelle la protubérance (280) comprend un évidement (281) au niveau de la face arrière (200b).

10. Utilisation d'une unité accumulateur dans un émetteur de poche sans fil, en particulier selon l'une quelconque des revendications 1 à 4, dans laquelle l'unité accumulateur comprend une face avant (200a), une face arrière (200b), une face gauche et une face droite (200e, 200f), une face supérieure (200c) et une face inférieure (200d), une protubérance (280) au niveau de la face inférieure (200d) et le long de la face arrière (200b) ainsi qu'au moins partiellement le long des faces gauche et droite (200e, 200f) un évidement (260) respectivement au niveau des faces droite et gauche (200f, 200e) vers la face arrière (200b) et une protubérance (250) respectivement dans les deux évidements (260) qui est reliée avec une première extrémité à la protubérance (280) et qui s'étend partiellement, en particulier entre 10 % et 80 %, le long de l'évidement (260).
